# EUROPÄISCHE PATENTANMELDUNG

(11) **EP 2 308 703 A1**
(43) Veröffentlichungstag der Anmeldung: **13.04.2011**
(21) Anmeldenummer: 10174988.5
(22) Anmeldetag: 02.09.2010
(51) Int. Cl.: B60G 11/30, B60G 11/27, B60G 7/00, B60G 9/00, B60G 17/052, B60G 17/04, B60G 11/64, B60G 21/055

(54) **Luftfederbein mit Zusatzvolumen**

(30) Priorität: 07.10.2009 DE 102009044189
(71) Anmelder: Continental Teves AG & Co. oHG, 60488 Frankfurt (DE)
(72) Erfinder: Rosner, Dirk, 30826 Garbsen (DE); Wehaus, Holger, 30449 Hannover (DE)
(74) Vertreter: Finger, Karsten

(57) **Zusammenfassung**

Fahrzeugluftfederbein (2) mit einer Luftfeder und einem Dämpfer, wobei die Luftfeder ein Luftvolumen umschließt, das über ein schaltbares Ventil (10) mit einem Zusatzvolumen (7) in Verbindung steht, welches in einem der Verbindungselemente (5,9) des Fahrwerks angeordnet ist, die das Federbein (2) und/oder den Radträger (3) mit der Karosserie verbinden.

## Beschreibung

### Luftfederbein mit Zusatzvolumen

Die Erfindung betrifft ein Fahrzeugfederbein mit einer Luftfeder und einem Dämpfer, wobei die Luftfeder ein Luftvolumen, nämlich das Luftfedervolumen umschließt, das über ein schaltbares Ventil mit einem weiteren und separaten Zusatzvolumen in Verbindung steht.

Federbeine mit Luftfedern dienen heute insbesondere in Personenkraftwagen als besonders komfortable Federungselemente und sorgen für ein angenehmes Fahrgefühl bei einer Federung, die je nach Straßenverhältnissen zwischen einem "weichen" und "harten" Federungsverhalten angepasst werden kann. Ein Luftfedersystem oder Niveauregelsystem besteht dabei aus den die Luftfeder- und Dämpfereinheiten umfassenden Luftfederbeinen für jedes Rad oder mindestens für jede Achse, aus der Luftversorgungsanlage mit einem Verdichter, einem Speicher, einem regenerierbaren Trockner, sowie aus weiteren schaltbaren oder festeingestellten pneumatischen Steuerelementen und weist dazu in aller Regel eine elektronische Steuerung auf.

Sowohl in Fahrwerken mit Luftfederbeinen, bei denen die Federung mit einer einen Luftfederbalg aufweisenden Luftfeder und die Dämpfung mit einem in aller Regel zentrisch angeordneten Hydraulikdämpfer erfolgt, als auch in Fahrwerken mit Luftfeder-Dämpfer-Systemen, bei denen sowohl die Federung als auch die Dämpfung pneumatisch erfolgt, ist es bekannt, Zusatzvolumina zu verwenden, um die Kennung der Federung zu verändern. Dabei wird bei bestimmten Fahrsituationen über schaltbare Strömungsventile das Zusatzvolumen zu- oder abgeschaltet und damit die Federkennung "weich oder hart" eingestellt.

Separat angeordnete Zusatzvolumina, wie sie etwa in Form von Kugelspeichern bekannt sind, müssen jedoch als zusätzliche Bauteile im Fahrwerksbereich untergebracht werden und benötigen daher ebenfalls zusätzlichen Bauraum im Radhaus, der insbesondere bei Kompaktfahrzeugen oft nicht vorhanden ist. Darüber hinaus ist bei den so genannten radführenden Federbeinen, etwa den McPherson Federbeinen, der Bauraum schon dadurch eine einschränkende Größe, dass diese Federbeine recht große Bewegungen relativ zur Karosserie durchführen. Zudem sind zur Verbindung solcher separater Zusatzvolumina längere flexible Leitungen zum Federbein / zur Luftfederung erforderlich, womit der Montageaufwand erhöht wird.

Eine Luftfederung mit einem zuschaltbaren Volumen ist beispielsweise aus der DE 197 10 399 C2 bekannt, bei der die Verbindung einer Luftfeder zu einem Zusatzvolumen in Abhängigkeit von dem Druck in der Luftfeder bzw. innerhalb des Zusatzvolumens bei geringen Drücken zu öffnen, jedoch bei hohen Druckdifferenzen eine schlagartige Öffnung zu verhindern. Dabei ist zwar grundsätzlich erkennbar, dass jeder Luftfeder ein solches schaltbares Zusatzvolumen zugeordnet ist, jedoch ist dessen genaue konstruktive Anordnung und Auslegung nicht beschrieben.

Für die Erfindung bestand also die Aufgabe, ein Luftfederbein mit einem Zusatzvolumen bereitzustellen, das auf einfache Weise durch Zu- oder Abschalten des Zusatzvolumens unterschiedliche Steifigkeiten bereitstellt, dass im Hinblick auf das Baumaß, also das so genannte "Packaging" möglichst wenig Bauraum im Fahrzeug benötigt, einfach zu montieren ist und sich relativ wenig in Bezug zur Luftfeder bewegt.

Gelöst wird diese Aufgabe durch die Merkmale des Hauptanspruchs. Weitere vorteilhafte Ausbildungen sind in den Unteransprüchen offenbart.

Dabei ist das Zusatzvolumen in einem der Verbindungselemente des Fahrwerks angeordnet ist, die das Federbein und/oder den Radträger mit der Karosserie verbinden. Das entsprechende Verbindungselement ist dabei konstruktiv so ausgeführt, dass es einen Hohlraum beinhaltet, in den durch z.B. den Kompressor oder den Speicher komprimierte Luft eingeführt und auf Abruf gespeichert werden kann. Damit ergibt sich zum einen eine direkte örtliche Nähe des Zusatzvolumens zum Luftfedervolumen im Federbein, was lange Leitungswege vermeidet, und zum anderen eine Integration des Bauteils für das Zusatzvolumen in ein anderes Bauteil, nämlich in ein Verbindungsbauteil. Der Gewinn an Bauraum ist damit erheblich.

Eine vorteilhafte Weiterbildung besteht darin, dass das Zusatzvolumen in einem mit einem Innenhohlraum versehenen Lenker des Fahrwerks angeordnet ist. Lenker sind in aller Regel zylindrisch, Stangen- oder rohrförmig ausgebildet und können besonders leicht mit einem innenliegenden Hohlraum hergestellt werden. Bei rohrförmigen Lenkern kann dies beispielsweise leicht durch ein ölhydraulisches "Aufblasen" beim Innendruckumfomen geschehen.

Eine weitere vorteilhafte Ausbildung besteht darin, dass das Zusatzvolumen in einem Verbindungselement zwischen Fahrzeugfederbein und Stabilisator angeordnet ist, nämlich in der so genannten Koppelstange, die die auf eine Rad bzw. ein Federbein wirkenden senkrechten Radkräfte auf den Stabilisator und damit auf die Karosserie oder das gegenüberliegende Fahrwerk überträgt. Üblicherweise ist die Koppelstange bei einem radführenden Federbein direkt am Dämpfer angebunden und liegt somit in unmittelbarer Näher der Luftfeder bzw. des Luftfedervolumens. Die Koppelstange ist zudem im Wesentlichen durch Längskäfte, also Druckkräfte belastet und kann somit einfach auf eine zusätzliche Innendruckbelastung ausgelegt werden.

Eine weitere vorteilhafte Ausbildung besteht darin, dass das Verbindungselement das schaltbare Ventil aufweist, durch welches das Zusatzvolumen mit dem Luftfedervolumen verbindbar ist. Dadurch ergibt sich eine weitere Bauteilintegration.

Eine weitere vorteilhafte Ausbildung besteht darin, dass das schaltbare Ventil (Schaltventil) durch die Bewegung des Verbindungselementes beim Einfedern betätigt wird. Damit kann eine einfache mechanische Steuerung aufgebaut werden, die z.B. bei besonders starkem Einfedern, also bei großen Bodenunebenheiten, das Zusatzvolumen zuschaltet und damit die Federung "weich" stellt.

Eine weitere vorteilhafte Ausbildung besteht darin, dass das schaltbare Ventil elektrisch betätigt wird. Damit kann die Steuerung des Zusatzvolumens leicht in eine elektronisch gesteuerte Niveauregulierungsanlage integriert werden.

Anhand eines Ausführungsbeispieles soll die Erfindung näher erläutert werden. Es zeigen
- Fig. 1: ein erfindungsgemäßes Luftfederbein mit schaltbarem Zusatzvolumen,
- Fig. 2: ein erfindungsgemäßes Luftfederbein in einer weiteren Ausführung.

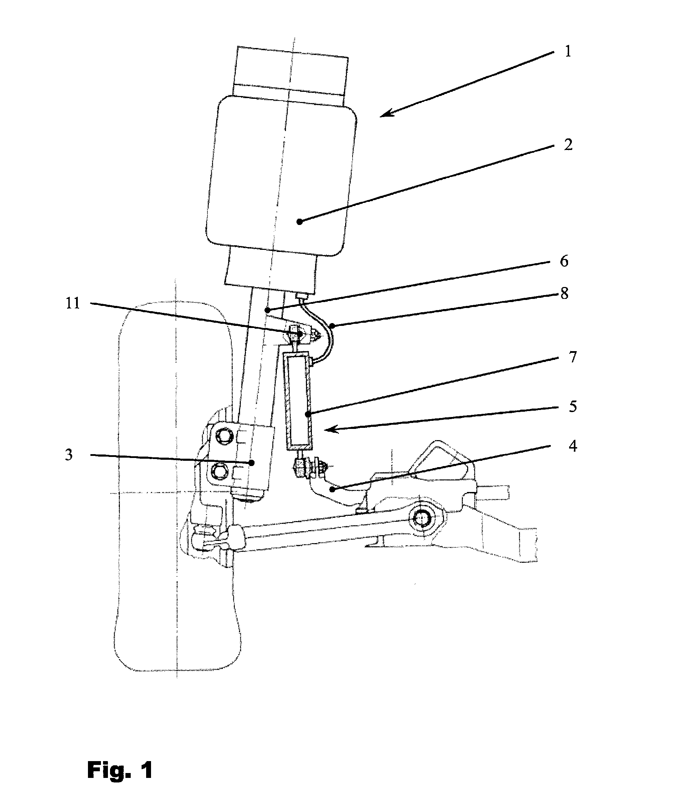

Die Fig. 1 zeigt ein Fahrwerk 1 eines Personenkraftwagens, welches ein Luftfederbein 2 aufweist, das zwischen einer hier nicht näher dargestellten Karosserie und dem Radträger 3 angeordnet ist.

Das Fahrwerk weist einen Stabilisator 4 auf, der über eine Koppelstange 5 an den Dämpferzylinder 6 des Luftfederbeines 2 angelenkt ist.

Die Koppelstange 5 ist mit einem Hohlraum versehen, der das Zusatzvolumen 7 enthält bzw. darstellt. Das Zusatzvolumen 7 ist über eine Druckleitung, hier über einen Druckschlauch 8, mit der Luftfeder über ein hier nicht näher dargestelltes und im Luftfederbein angeordnetes Schaltventil verbunden.

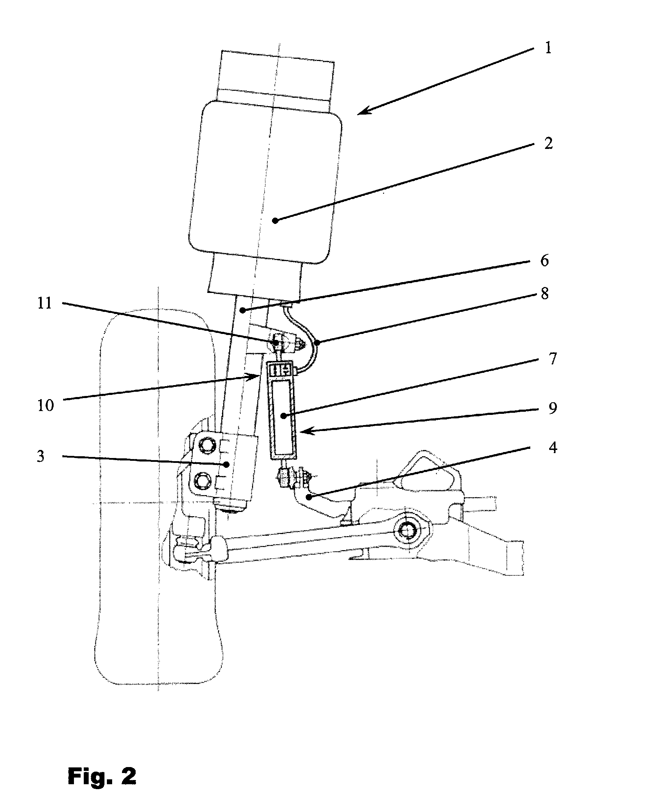

Die Fig. 2 zeigt ein Fahrwerk 1 in einer anderen Ausführung, welches ebenfalls ein Luftfederbein 2 aufweist, das zwischen Karosserie und Radträger 3 angeordnet ist. Die hier zur Verbindung mit dem Stabilisator 4 vorgesehene Koppelstange 9 weist ein elektrisch betätigbares, schaltbares Ventil 10 auf, durch welches das Zusatzvolumen mit dem Luftfedervolumen verbindbar ist. Bei dieser Ausführung wird das Zusatzvolumen abhängig von den Signalen eines elektrischen Druckaufnehmers im Anlenkpunkt 11 der Koppelstange zu- oder abgeschaltet.

Natürlich kann das elektrisch schaltbare Ventil auch vom Fahrer betätigt werden, wenn er eine komfortabel und weich abgestimmte oder etwa eine straffe Federung wünscht, etwa durch Betätigung eines Schaltknopfes, der die Schaltmöglichkeiten "Komfortfederung" und "Sportfederung" ermöglicht und damit das Zusatzvolumen zu- oder abschaltet.

### Bezugszeichenliste

### (Teil der Beschreibung)

- 1: Fahrwerk
- 2: Luftfederbein
- 3: Radträger
- 4: Stabilisator
- 5: Koppelstange
- 6: Dämpferzylinder
- 7: Zusatzvolumen
- 8: Druckschlauch
- 9: Koppelstange
- 10: Schaltventil
- 11: Anlenkpunkt

## Patentansprüche

1. Fahrzeugluftfederbein (2) mit einer Luftfeder und einem Dämpfer, wobei die Luftfeder ein Luftvolumen umschließt, das über ein schaltbares Ventil (10) mit einem Zusatzvolumen (7) in Verbindung steht, **dadurch gekennzeichnet, dass** das Zusatzvolumen (7) in einem der Verbindungselemente (5, 9) des Fahrwerks angeordnet ist, die das Federbein (2) und/oder den Radträger (3) mit der Karosserie verbinden.

2. Fahrzeugfederbein (2) nach Anspruch 1, bei dem das Zusatzvolumen (7) in einem mit einem Innenhohlraum versehenen Lenker (5, 9) des Fahrwerks angeordnet ist.

3. Fahrzeugfederbein (2) nach Anspruch 2, bei dem das Zusatzvolumen (7) in einem Verbindungselement (5, 9) zwischen Fahrzeugfederbein (2) und Stabilisator (4) angeordnet ist.

4. Fahrzeugfederbein (2) nach einem der Ansprüche 1 bis 3, bei dem das Verbindungselement (5, 9) das schaltbare Ventil (10) aufweist, durch welches das Zusatzvolumen (7) mit dem Luftfedervolumen verbindbar ist.

5. Fahrzeugfederbein (2) nach Anspruch 4, bei dem das schaltbare Ventil (10) durch die Bewegung des Verbindungselementes beim Einfedern betätigbar ist.

6. Fahrzeugfederbein (2) nach einem der Ansprüche 4 oder 5, bei dem das schaltbare Ventil (10) elektrisch betätigbar ist.
